# EUROPÄISCHE PATENTSCHRIFT

(11) **EP 3 383 795 B1**
(45) Veröffentlichungstag und Bekanntmachung des Hinweises auf die Patenterteilung: **22.05.2019**
(21) Anmeldenummer: 16791398.7
(22) Anmeldetag: 07.11.2016
(51) Int. Cl.: C01B 33/027, B01J 8/18

(54) **WIRBELSCHICHTREAKTOR UND VERFAHREN ZUR HERSTELLUNG VON POLYKRISTALLINEM SILICIUMGRANULAT**
FLUIDIZED BED REACTOR AND METHOD FOR PRODUCING POLYCRYSTALLINE SILICON GRANULATE
RÉACTEUR À LIT FLUIDISÉ ET PROCÉDÉ DE PRODUCTION DE SILICIUM POLYCRISTALLIN GRANULAIRE

(30) Priorität: 02.12.2015 DE 102015224099
(43) Veröffentlichungstag der Anmeldung: 10.10.2018
(73) Patentinhaber: Wacker Chemie AG, 81737 München (DE)
(72) Erfinder: PEDRON, Simon, 89012 Meran (IT)
(74) Vertreter: Belz, Ferdinand
(86) Internationale Anmeldenummer: PCT/EP2016/076776
(87) Internationale Veröffentlichungsnummer: WO 2017/092970

(56) Entgegenhaltungen:
- WO-A1-2007/145474
- WO-A1-2008/018760
- WO-A2-2012/050341
- US-A- 5 126 112
- US-A1- 2011 206 866
- US-A1- 2013 316 077

## Beschreibung

Die Erfindung betrifft einen Wirbelschichtreaktor und ein Verfahren zur Herstellung von polykristallinem Siliciumgranulat.

Polykristallines Siliciumgranulat wird in einem Wirbelschicht- bzw. Fließbettreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Abscheidereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumkeimpartikel kann das Verfahren kontinuierlich mit allen damit verbundenen Vorteilen betrieben werden. Als siliciumhaltiges Eduktgas sind Silicium-Halogenverbindungen (z.B. Chlorsilane oder Bromsilane), Silan (SiH₄), sowie Mischungen dieser Gase mit Wasserstoff beschrieben. Bei diesem Verfahren geht ein nennenswerter Anteil der eingesetzten Heizleistung über gekühlte Reaktor-Außenwandungen verloren. Um die Energieeffizienz des Reaktors und damit auch des Verfahrens zur Herstellung von polykristallinem Siliciumgranulat zu erhöhen werden bekanntlich Reaktorkomponenten, die sich im Prozess auf hohe Temperaturen aufheizen, thermisch zur gekühlten Reaktorhülle hin isoliert.

So ist aus US20000677347 ein Wirbelschichtreaktor mit einer Isolierung zwischen dem Strahlungsheizer und der Reaktor-Außenwandung bekannt. Die Isolierung besteht bevorzugt aus Quarz oder Metall-Silikat.

Aus US5798137A ist eine Isolierung im Heizmantel eines Wirbelschichtreaktors aus Aluminiumoxid-Siliciumoxid-Fasern bekannt.

Aus US2009004090A ist bekannt, zwischen Heizer und äußerer Reaktorhülle ein anorganisches Isolationsmaterial einzubringen. WO2007145474 offenbart einen Wirbelschichtreaktor mit einem Isolationsmaterial auf der äußeren Oberfläche der Reaktorhülle.

Aufgabe der Erfindung ist es, einen Wirbelschichtreaktor zur Herstellung von polykristallinem Siliciumgranulat durch Abscheidung von polykristallinem Silicium auf Silicium-Keimpartikeln (seed) bereit zu stellen, der eine höhere Energieeffizienz besitzt als ein bekannter Wirbelschichtreaktor.

Die Aufgabe wird gelöst durch einen Wirbelschichtreaktor, umfassend einen Reaktorbehälter,
ein Innen-Reaktorrohr für eine Wirbelschicht mit granularem Polysilicium,
einen Reaktorboden innerhalb des Reaktorbehälters,
wenigstens eine Bodengasdüse zur Zuführung eines Fluidisierungsgases sowie
wenigstens eine Reaktionsgasdüse zur Zuführung eines Reaktionsgasgemisches,
eine Zuführeinrichtung, um Silicium-Keimpartikel zuzuführen, sowie
eine Entnahmeleitung für granulares Polysilicium und eine Einrichtung zum Abführen von Reaktorabgas aus dem Reaktorbehälter,
einen Zwischenraum zwischen dem Reaktorbehälter und dem Innen-Reaktorrohr, in dem sich
eine Heizvorrichtung zum Heizen der Wirbelschicht im Innen-Reaktorrohr sowie
ein Isolationsmaterial befinden,
dadurch gekennzeichnet, dass in dem Zwischenraum zwischen dem Heizer und dem Isolationsmaterial Strahlungsschilde vorhanden sind und der Zwischenraum ein Inertgas enthält.

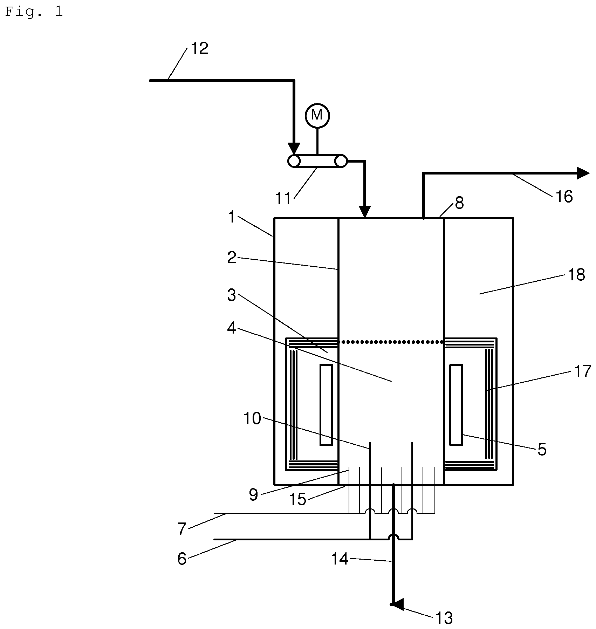

Eine bevorzugte Ausführungsform der Erfindung ist in Fig. 1 dargestellt. Dieser Wirbelschichtreaktor umfasst einen Reaktorbehälter (1),
ein Innen-Reaktorrohr (2) für eine Wirbelschicht (4) mit granularem Polysilicium,
einen Reaktorboden (15),
eine oder mehrere Bodengasdüsen (9), um dem Innen-Reaktorrohr (2) ein Fluidisierungsgas (7) zuzuführen, und
eine oder mehrere Reaktionsgasdüsen (10), um dem Innen-Reaktorrohr (2) ein Reaktionsgasgemisch (6) zuzuführen,
einen Reaktorkopf (8), über den mittels einer Seedzuführeinrichtung (11) dem Innen-Reaktorrohr (2) Seed (12)zugeführt wird,
eine Entnahmeleitung (14) am Reaktorboden (15), über die das Polysilicium-Granulat-Produkt (13) entnommen wird,
eine Einrichtung zum Abführen von Reaktorabgas (16) aus dem Innen-Reaktorrohr (2),
eine Heizvorrichtung (5) zum Erhitzen der Wirbelschicht (4), ein Isolationsmaterial (18) im Zwischenraum zwischen der Innenwand des Behälters (1) und der Außenwand des Innen-Reaktorrohrs (2),
dadurch gekennzeichnet, dass in dem Zwischenraum (3) zwischen dem Heizer (5) und dem Isolationsmaterial (18) Strahlungsschilde (17) vorhanden sind und der Zwischenraum (3) ein Inertgas enthält.

Die Höhe der Reaktionsgasdüsen (10) im Reaktor kann sich von der Höhe der Bodengasdüsen (9) unterscheiden. Im Reaktor bildet sich durch die Anordnung der Düsen eine blasenbildende Wirbelschicht mit zusätzlicher vertikaler Sekundärgaseindüsung aus.

Der Reaktorkopf (8) kann einen größeren Querschnitt als die Wirbelschicht haben.

Die Strahlungsschilde (17) befinden sich auf der Seite des Heizers (5), die vom Innen-Reaktorrohr abgewandt ist. Vorzugsweise sind sie um den Heizer (5) angeordnet. Besonders bevorzugt ist jeweils ein kreisringförmiges Strahlungsschild ober- und unterhalb des Heizers (5) angebracht und ein zylindrisches Strahlungsschild hinter dem Heizer (5). Es ist dabei auch möglich, das obere und das zylindrische oder das untere und das zylindrische Strahlungsschild miteinander zu verbinden.

Die Strahlungsschilde bewirken eine Abschirmung der Behälterwandungen des Reaktors, es geht weniger Energie in die gekühlte Wandung über als bei einer Isolierung alleine. Die Strahlungsschilde verringern somit signifikant den Wärmeverlust durch Strahlung. Die Isolierungen absorbieren nur noch einen Bruchteil der thermischen Strahlung vom Heizer und heißen Einbauteilen.

Erfindungsgemäß ist es vorteilhaft, wenn der Strahlungsschild einen möglichst kleiner Emissionsgrad ε, bzw. einen möglichst hohen Reflexionsgrad aufweist. Des Weiteren ist es vorteilhaft, wenn der Strahlungsschild aus einer möglichst großen Anzahl an Lagen aufgebaut ist.

Ein Strahlungsschild kann aus einer oder mehreren Lagen bestehen. Vorzugsweise besteht ein Strahlungsschild aus ein bis 20 Lagen, bevorzugt aus ein bis 10 Lagen, besonders bevorzugt aus ein bis 7 Lagen.

Eine Lage eines Strahlungsschilds kann einteilig sein oder aus mehreren miteinander vernieteten, verschweißten, gesteckten, verschraubten, monolithisch verbundenen, gesinterten, reaktionsgesinterten, gelöteten, geklebten oder nebeneinander angeordneten Blechen einer jeweiligen Dicke von 0,05 bis 30 mm, bevorzugt 0,05 bis 10 mm, besonders bevorzugt 0,2 bis 5 mm bestehen. Die einzelnen Lagen eines Strahlungsschilds müssen nicht gasdicht sein.

Die einzelnen Lagen haben einen Abstand von 1 bis 150 mm, bevorzugt 1 bis 50 mm, besonders bevorzugt 2 bis 15 mm voneinander.

Der Abstand der einzelnen Lagen voneinander wird durch Distanzhalter bzw. bei nicht planarer Ausführung durch charakteristische Abmessungen der einzelnen Lagen und Distanzhalter sichergestellt. Bei einem zylindrischen Hitzeschild beispielsweise müssen der Durchmesser der einzelnen Lagen und die Dicke der Distanzhalter zueinander passen. Als Distanzhalter sind vorzugsweise Stege, Rippen, Noppen, Ringe, profilierte Bleche wie beispielsweise U-Profile oder gewellte Bleche oder aus Vollmaterial bestehende Strukturen wie beispielsweise Quader, Pyramiden, Zylinder oder sonstige übliche geometrische Formen geeignet.

Ist der Strahlungsschild vertikal zu den einzelnen Lagen abgeschlossen, können in der abschließenden Oberfläche Vorrichtungen zur Halterung der einzelnen Lagen enthalten sein.

Die Distanzhalter und die einzelnen Lagen des Strahlungsschilds sind miteinander vorzugsweise durch Schweißen, Löten, Sintern, Reaktionssintern, monolithisch, eine Schraubenverbindung, eine Nietenverbindung, eine Steckverbindung oder eine Klebeverbindung verbunden.

Soll der Wärmeverlust durch Konvektion zwischen den einzelnen Lagen des Strahlungsschildes minimiert werden, so kann der Strahlungsschild an den Außenseiten verschlossen und ggf. bei gasdichter Ausführung evakuiert werden. Alternativ oder zusätzlich können Hindernisse zur Unterbindung thermisch induzierter Konvektion zwischen den einzelnen Lagen des Strahlungsschilds eingebunden werden. Derartige Hindernisse sind beispielsweise Strukturen aus Vollmaterial, die den freien Strömungsquerschnitt bei natürlicher oder erzwungener Konvektion komplett oder teilweise verschließen. So können zum Beispiel in einem zylindrischen, stehenden Hitzeschild horizontal angeordnete Kreisring-Bleche zwischen den einzelnen Lagen eingebracht werden.

Je nach Anforderung an das Temperaturprofil im Reaktorrohr können die einzelnen Strahlungsschilde so ausgeführt sein, dass die einzelnen Lagen planar oder Mantelflächen eines Zylinders mit runder oder ovaler Grundfläche oder eines Körpers mit polygonaler Grundfläche sind.

Je nach Einbausituation müssen Öffnungen in den Strahlungsschilden realisiert werden, beispielsweise für TemperaturMessungen, Heizer-Durchführungen, zur Gasdurchführung oder für die Montagevorrichtung.

Die einzelne Lage des Strahlungsschilds enthält bevorzugt eines oder mehrere der folgenden Materialien: Siliciumdioxid, Siliciumcarbid, Silicium, Kohlenstoff, Aluminiumoxid, Molybdän, Wolfram, Nickel oder Chrom.

Besonders bevorzugt enthält der Strahlungsschild Quarzit, Quarzkeramik, Quarzglas, Quarzglas mit reflektierendem SiO₂-coating, Molybdän oder Molybdänlegierungen wie beispielsweise Molybdän/Lanthanoxid, Wolfram oder eine Wolframlegierung, Stahllegierungen, wie z.B. 1.4828 - X 15 CrNiSi 20 12 2; 1.4872 - X 25 CrMnNi 25 9 7; 1.4876 - X 10 NiCrAlTi 32 21; 1.4841 - X 15 Cr Ni Si 25 21, Nickelbasislegierungen, wie z.B. 2.4663 - NiCr₂₃Co₁₂Mo, Graphit, CFC (Carbonfaser-verstärkter Kohlenstoff), Graphitfolie, rekristallisiertes, nitridgebundenes, gesintertes oder siliciuminfiltriertes Siliciumcarbid, gesinteretes Siliciumnitrid.

Insbesondere bevorzugt enthält das Strahlungsschild Molybdän oder eine Molybdänlegierung wie beispielsweise Mo/La, Wolfram oder eine Wolframlegierung, CFC, Graphit oder Stahllegierungen, wie z.B. 1.4828 - X 15 CrNiSi 20 12 2; 1.4872 - X 25 CrMnNi 25 9 7; 1.4876 - X 10 NiCrAlTi 32 21; 1.4841 - X 15 Cr Ni Si 25 21, Nickelbasislegierungen, wie z.B. 2.4663 - NiCr₂₃Co₁₂Mo.

Vorzugsweise bestehen die einzelnen Lagen eines Strahlungsschilds aus einem der genannten Materialien wobei die Materialien der einzelnen Lagen unterschiedlich sein können. In einer besonders bevorzugten Ausführungsform besteht der Strahlungsschild aus einem der genannten Materialien, und ist an der Innenseite und/oder Außenseite umwickelt mit einer Graphitfolie einer Stärke von 5 µm bis 5 mm.

In einer anderen besonders bevorzugten Ausführungsform besteht der Strahlungsschild aus einem der genannten Materialien und ist an der Innenseite und/oder Außenseite beschichtet mit einer 3 µm bis 5 mm dicken CVD-Schicht aus Kohlenstoff ("Pyro-Graphit" oder "Pyro-Kohlenstoff").

In einer weiteren bevorzugten Ausführungsform besteht der Strahlungsschild aus einem der genannten Materialien und ist an der Innenseite und/oder Außenseite beschichtet, umwickelt oder verbunden mit einer Schicht, einer Folie oder einem Blech einer Stärke von 1 µm bis 5 mm aus den Hauptbestandteilen Molybdän oder Wolfram.

In einer weiteren besonders bevorzugten Ausführungsform besteht der Strahlungsschild aus einem der genannten Materialien und ist an der Innenseite und/oder Außenseite beschichtet, umwickelt oder verbunden mit einer Schicht, einer Folie oder einem Blech mit einer Stärke von 1 µm bis 5 mm aus Silber oder Gold.

In einer weiteren besonders bevorzugten Ausführungsform besteht der Strahlungsschild aus einem der genannten Materialien und ist an der Innenseite und/oder Außenseite beschichtet, umwickelt oder verbunden mit einer Schicht, einer Folie oder einem Blech aus einem Material einer Stärke von 1 µm bis 5 mm, welches bei Einsatztemperatur einen Reflexionsgrad gegenüber thermischer Strahlung > 40 % aufweist.

Der erfindungsgemäße Wirbelschichtreaktor verbilligt Verfahren zur Herstellung von granularem Polysilicium. Die Erfindung betrifft daher auch ein Verfahren zur Herstellung von granularem Polysilicium umfassend Fluidisierung von Silicium-Keimpartikeln (Seed) mittels einer Gasströmung in einer Wirbelschicht, die mittels einer Heizvorrichtung aufgeheizt wird, wobei durch Zugabe eines siliciumhaltigen Reaktionsgases mittels Pyrolyse polykristallines Silicium an den heißen Keimpartikeloberflächen abgeschieden wird, wodurch das granulare Polysilicium entsteht, dadurch gekennzeichnet, dass die Umsetzung in einem erfindungsgemäßen Reaktor erfolgt.

Ein derartiges Verfahren wird durchgeführt wie aus dem Stand der Technik bekannte Verfahren, wobei aber eine im Vergleich zu üblichen Verfahren signifikante Energieeinsparung erzielt wird.

Vorzugsweise ist bei der Durchführung des Verfahrens der Druck im Zwischenraum zwischen der Innenwand des Reaktorbehälters und der Außenwand des Innen-Reaktorrohrs höher als im Innen-Reaktorrohr.

Vorzugsweise wird der Zwischenraum zwischen der Innenwand des Reaktorbehälters und der Außenwand des Innen-Reaktorrohrs mit Inertgas gespült.

Bei dem Inertgas handelt es sich vorzugsweise um Stickstoff, Argon, Helium oder Kohlendioxid.

Fig. 1 zeigt eine vorstehend beschriebene bevorzugte Ausführungsform des erfindungsgemäßen Wirbelschichtreaktors.

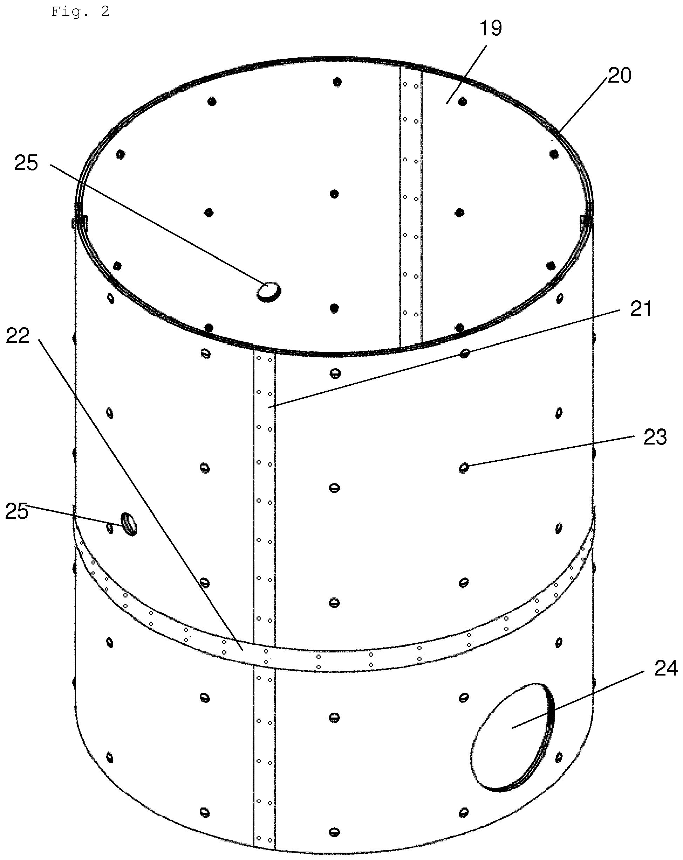

Fig. 2 zeigt ein Konstruktionsbeispiel eines zylindrischen Strahlungsschilds (19) mit U-Profilen (20) als Distanzhaltern. Der Strahlungsschild besteht aus Molybdän. Die drei Lagen bestehen aus miteinander vernieteten Blechen (21, 22) und sind miteinander verschraubt (23). Der Abstand zwischen den einzelnen Lagen beträgt 5 mm, die Blechstärke 0,5 mm. Bohrungen für Elektrodendurchführungen des Strahlungsheizers (24) und zur Temperaturmessung mit Pyrometern (25) sind enthalten.

Das folgende Beispiel dient der weiteren Erläuterung der Erfindung.

### Beispiel 1

In einem Wirbelschichtreaktor nach Fig. 1, aber ohne Strahlungsschild, wurde hochreines Polysilicium-Granulat aus Trichlorsilan abgeschieden. Als Fluidisierungsgas wurde Wasserstoff eingesetzt. Die Abscheidung fand bei einem Druck von 4,5 bar (abs) und einer Temperatur von 1000°C statt. Es wurde kontinuierlich Produkt abgezogen und die Seed-Zufuhr wurde so geregelt, dass der Sauter-Durchmesser des Produkts 1000±50 µm beträgt. Der Zwischenmantel wurde mit Stickstoff gespült. Insgesamt wurden 800 kg/h Gas zugeführt. Es wurde eine Abscheiderate von 30,4 kg h⁻¹ erzielt.

Die Isolierung um den Strahlungsheizer hatte eine Dicke von 150 mm und bestand aus Kohlenstoff-Hartfilz. Es waren keine Strahlungsschilde enthalten. Der Heizer brauchte für diesen Prozess eine Heizleistung von 402 kW.

Der gleiche Prozess wurde in einem baugleichen Reaktor, aber mit Strahlungsschild, unter gleichen Betriebsbedingungen gefahren. Dabei betrug die Dicke der Isolierung um den Heizer 120 mm, zwischen Isolierung und Heizer befand sich ein fünflagiges Strahlungsschild aus Wolfram. Auch ober- und unterhalb des Heizers befanden sich wie in Fig. 1 ersichtlich Strahlungsschilde, wobei die Isolierungen jeweils um die Dicke der Strahlungsschilde (insgesamt 30 mm) reduziert wurden. Der Heizer benötigte für diesen Prozess eine Heizleistung von 375 kW. Dies entspricht einer Einsparung von 6,7 %.

## Patentansprüche

1. Wirbelschichtreaktor zur Herstellung von polykristallinem Siliciumgranulat, umfassend einen Reaktorbehälter,
ein Innen-Reaktorrohr für eine Wirbelschicht mit granularem Polysilicium,
einen Reaktorboden innerhalb des Reaktorbehälters, wenigstens eine Bodengasdüse zur Zuführung von Fluidisierungsgas sowie
wenigstens eine Reaktionsgasdüse zur Zuführung eines Reaktionsgasgemisches,
eine Zuführeinrichtung, um Silicium-Keimpartikel zuzuführen, sowie
eine Entnahmeleitung für granulares Polysilicium und eine Einrichtung zum Abführen von Reaktorabgas aus dem Reaktorbehälter,
einen Zwischenraum zwischen dem Reaktorbehälter und dem Innen-Reaktorrohr, in dem sich
eine Heizvorrichtung zum Heizen der Wirbelschicht im Innen-Reaktorrohr sowie
ein Isolationsmaterial befinden,
**dadurch gekennzeichnet, dass** in dem Zwischenraum zwischen dem Heizer und dem Isolationsmaterial Strahlungsschilde vorhanden sind und der Zwischenraum ein Inertgas enthält.

2. Wirbelschichtreaktor gemäß Anspruch 1, umfassend
einen Reaktorbehälter (1),
ein Innen-Reaktorrohr (2) für eine Wirbelschicht (4) mit granularem Polysilicium,
einen Reaktorboden (15),
eine oder mehrere Bodengasdüsen (9) um dem Innen-Reaktorrohr (2) ein Fluidisierungsgas (7) zuzuführen, und eine oder mehrere Reaktionsgasdüsen (10), um dem Innen Reaktorrohr (2) ein Reaktionsgasgemisch (6) zuzuführen, einen Reaktorkopf (8), über den mittels einer Seedzuführeinrichtung (11) dem Innen-Reaktorrohr (2) Seed (12) zugeführt wird,
eine Entnahmeleitung (14) am Reaktorboden (15), über die das Polysilicium-Granulat-Produkt (13) entnommen wird, eine Einrichtung zum Abführen von Reaktorabgas (16) aus dem Innen-Reaktorrohr (2),
eine Heizvorrichtung (5) zum Erhitzen der Wirbelschicht (4),
ein Isolationsmaterial (18) im Zwischenraum (3) zwischen der Innenwand des Behälters (1) und der Außenwand des Innen-Reaktorrohrs (2),
**dadurch gekennzeichnet, dass** in dem Zwischenraum (3) zwischen dem Heizer (5) und dem Isolationsmaterial (18) Strahlungsschilde (17) vorhanden sind und der Zwischenraum (3) ein Inertgas enthält.

3. Wirbelschichtreaktor nach Anspruch 1 oder 2, **dadurch gekennzeichnet, dass** Strahlungsschilde um den Heizer angeordnet sind.

4. Wirbelschichtreaktor nach Anspruch 1, 2 oder 3, **dadurch gekennzeichnet, dass** jeweils ein kreisringförmiges Strahlungsschild ober- und unterhalb des Heizers und ein zylindrisches Strahlungsschild außerhalb des Heizers angebracht ist.

5. Wirbelschichtreaktor nach einem oder mehreren der Ansprüche 1 bis 4, **dadurch gekennzeichnet, dass** der Strahlungsschild aus ein bis 20 Lagen besteht.

6. Wirbelschichtreaktor nach einem oder mehreren der Ansprüche 1 bis 5, **dadurch gekennzeichnet, dass** der Strahlungsschild eines oder mehrere der folgenden Materialien enthält: Siliciumdioxid, Siliciumcarbid, Silicium, Kohlenstoff, Aluminiumoxid, Molybdän, Wolfram, Nickel oder Chrom.

7. Wirbelschichtreaktor nach Anspruch 5 oder 6, **dadurch gekennzeichnet, dass** die einzelnen Lagen des Strahlungsschilds aus einem der genannten Materialien bestehen, wobei die Materialien der einzelnen Lagen unterschiedlich sein können.

8. Verfahren zur Herstellung von granularem Polysilicium, umfassend Fluidisierung von Silicium-Keimpartikeln mittels einer Gasströmung in einer Wirbelschicht, die mittels einer Heizvorrichtung aufgeheizt wird, wobei durch Zugabe eines siliciumhaltigen Reaktionsgases mittels Pyrolyse polykristallines Silicium an den heißen Keimpartikeloberflächen abgeschieden wird, wodurch das granulare Polysilicium entsteht, **dadurch gekennzeichnet, dass** das Verfahren in einem Wirbelschichtreaktor gemäß einem oder mehreren der Ansprüche 1 bis 6 durchgeführt wird.

9. Verfahren gemäß Anspruch 7, **dadurch gekennzeichnet, dass** der Druck im Zwischenraum zwischen der Innenwand des Reaktorbehälters und der Außenwand des Innen-Reaktorrohrs höher ist als im Innen-Reaktorrohr.

10. Verfahren gemäß Anspruch 7 oder 8, **dadurch gekennzeichnet, dass** der Zwischenraum zwischen der Innenwand des Reaktorbehälters und der Außenwand des Innen-Reaktorrohrs mit Inertgas gespült wird.

## Claims

1. Fluidized bed reactor for production of polycrystalline silicon in granular form, said reactor comprising a reactor container,
an inner reactor tube for a fluidized bed comprising granular polysilicon,
a reactor bottom within the reactor container,
at least one bottom gas nozzle for feeding fluidization gas, and also
at least one reaction gas nozzle for feeding a reaction gas mixture,
feed means for feeding silicon seed particles, and also
a discharge line for granular polysilicon, and means for leading reactor exit gas out of the reactor container,
an interspace situated between the reactor container and the inner reactor tube and containing
a heating device for heating the fluidized bed in the inner reactor tube, and also
an insulation material,
**characterized in that** radiation shields are present in the interspace between the heater and the insulation material and the interspace contains an inert gas.

2. Fluidized bed reactor according to Claim 1, comprising
a reactor container (1),
an inner reactor tube (2) for a fluidized bed (4) comprising granular polysilicon,
a reactor bottom (15),
one or more bottom gas nozzles (9) for supplying the inner reactor tube (2) with a fluidization gas (7), and
one or more reaction gas nozzles (10) for supplying the inner reactor tube (2) with a reaction gas mixture (6),
a reactor head (8) via which seed feed means (11) supply the inner reactor tube (2) with seed (12),
a discharge line (14) at the reactor bottom (15), via which the granular polysilicon product (13) is discharged,
means for leading reactor exit gas (16) out of the inner reactor tube (2),
a heating device (5) for heating the fluidized bed (4),
an insulation material (18) in the interspace (3) between the inside wall of the container (1) and the outside wall of the inner reactor tube (2), **characterized in that** radiation shields (17) are present in the interspace (3) between the heater (5) and the insulation material (18) and the interspace (3) contains an inert gas.

3. Fluidized bed reactor according to Claim 1 or 2, **characterized in that** radiation shields are arranged about the heater.

4. Fluidized bed reactor according to Claim 1, 2 or 3, **characterized in that** a circularly ring-shaped radiation shield is attached above the heater, a circularly ring-shaped radiation shield is attached below the heater, and a cylindrical radiation shield is attached outside the heater.

5. Fluidized bed reactor according to one of more of Claims 1 to 4, **characterized in that** the radiation shield consists of one to 20 plies.

6. Fluidized bed reactor according to one or more of Claims 1 to 5, **characterized in that** the radiation shield contains one or more of the following materials: silicon dioxide, silicon carbide, silicon, carbon, aluminum oxide, molybdenum, tungsten, nickel or chromium.

7. Fluidized bed reactor according to Claim 5 or 6, **characterized in that** the individual plies of the radiation shield consist of any one of the recited materials, while the materials of the individual plies may be different.

8. Method for producing granular polysilicon, which method comprises fluidizing silicon seed particles using a gas flow in a fluidized bed being heated by a heating device, wherein admixing a silicon-containing reaction gas under pyrolysis is used to deposit polycrystalline silicon on the hot seed particle surfaces to thereby form the granular polysilicon, **characterized in that** the method is carried out in a fluidized bed reactor according to one or more of Claims 1 to 6.

9. Method according to Claim 7, **characterized in that** the pressure in the interspace between the inside wall of the reactor container and the outside wall of the inner reactor tube is higher than in the inner reactor tube.

10. Method according to Claim 7 or 8, **characterized in that** the interspace between the inside wall of the reactor container and the outside wall of the inner reactor tube is flushed with inert gas.

## Revendications

1. Réacteur à lit fluidisé pour la fabrication d'un granulat de silicium polycristallin, comprenant un contenant de réacteur, un tube de réacteur intérieur pour un lit fluidisé avec du polysilicium granulaire,
un fond de réacteur dans le contenant de réacteur,
au moins une buse de gaz de fond pour l'introduction d'un gaz de fluidisation, ainsi que
au moins une buse de gaz de réaction pour l'introduction d'un mélange gazeux de réaction,
un dispositif d'alimentation pour l'introduction de particules germes de silicium, ainsi que une conduite de soutirage pour le polysilicium granulaire et
un dispositif pour le déchargement d'un gaz d'échappement du réacteur du contenant de réacteur,
un espace intermédiaire entre le contenant de réacteur et le tube de réacteur intérieur, dans lequel un dispositif de chauffage pour le chauffage du lit fluidisé dans le tube de réacteur intérieur, et
un matériau isolant se trouvent,
**caractérisé en ce que** des écrans de protection au rayonnement sont présents dans l'espace intermédiaire entre le dispositif de chauffage et le matériau isolant, et l'espace intermédiaire contient un gaz inerte.

2. Réacteur à lit fluidisé selon la revendication 1, comprenant :
un contenant de réacteur (1),
un tube de réacteur intérieur (2) pour un lit fluidisé (4) avec du polysilicium granulaire,
un fond de réacteur (15),
une ou plusieurs buses de gaz de fond (9) pour l'introduction d'un gaz de fluidisation (7) dans le tube de réacteur intérieur (2), et
une ou plusieurs buses de gaz de réaction (10) pour l'introduction d'un mélange gazeux de réaction (6) dans le tube de réacteur intérieur (2),
une tête de réacteur (8), par le biais de laquelle une semence (12) est introduite dans le tube de réacteur intérieur (2) au moyen d'un dispositif d'introduction de semence (11),
une conduite de soutirage (14) au fond du réacteur (15), par laquelle le produit granulat de polysilicium (13) est soutiré,
un dispositif pour le déchargement d'un gaz d'échappement du réacteur (16) du tube de réacteur intérieur (2),
un dispositif de chauffage (5) pour le chauffage du lit fluidisé (4),
un matériau isolant (18) dans l'espace intermédiaire (3) entre la paroi intérieure du contenant (1) et la paroi extérieure du tube de réacteur intérieur (2),
**caractérisé en ce que** des écrans au rayonnement (17) sont présents dans l'espace intermédiaire (3) entre le dispositif de chauffage (5) et le matériau isolant (18), et l'espace intermédiaire (3) contient un gaz inerte.

3. Réacteur à lit fluidisé selon la revendication 1 ou 2, **caractérisé en ce que** des écrans au rayonnement sont agencés autour du dispositif de chauffage.

4. Réacteur à lit fluidisé selon la revendication 1, 2 ou 3, **caractérisé en ce qu'**un écran au rayonnement circulaire est disposé au-dessus et en dessous du dispositif de chauffage et un écran au rayonnement cylindrique est disposé à l'extérieur du dispositif de chauffage.

5. Réacteur à lit fluidisé selon une ou plusieurs des revendications 1 à 4, **caractérisé en ce que** l'écran au rayonnement est constitué par une à 20 couches.

6. Réacteur à lit fluidisé selon une ou plusieurs des revendications 1 à 5, **caractérisé en ce que** l'écran au rayonnement contient un ou plusieurs des matériaux suivants : dioxyde de silicium, carbure de silicium, silicium, carbone, oxyde d'aluminium, molybdène, tungstène, nickel ou chrome.

7. Réacteur à lit fluidisé selon la revendication 5 ou 6, **caractérisé en ce que** les couches individuelles de l'écran au rayonnement sont constituées par un des matériaux mentionnés, les matériaux des couches individuelles pouvant être différents.

8. Procédé de fabrication de polysilicium granulaire, comprenant la fluidisation de particules germes de silicium au moyen d'un courant gazeux dans un lit fluidisé, qui est chauffé au moyen d'un dispositif de chauffage, du silicium polycristallin étant déposé sur les surfaces des particules germes chaudes par pyrolyse par ajout d'un gaz de réaction contenant du silicium, le polysilicium granulaire étant ainsi formé, **caractérisé en ce que** le procédé est réalisé dans un réacteur à lit fluidisé selon une ou plusieurs des revendications 1 à 6.

9. Procédé selon la revendication 7, **caractérisé en ce que** la pression dans l'espace intermédiaire entre la paroi intérieure du contenant de réacteur et la paroi extérieure du tube de réacteur intérieur est plus élevée que dans le tube de réacteur intérieur.

10. Procédé selon la revendication 7 ou 8, **caractérisé en ce que** l'espace intermédiaire entre la paroi intérieure du contenant de réacteur et la paroi extérieure du tube de réacteur intérieur est rincé avec un gaz inerte.
